(19) Europäisches Patentamt / European Patent Office / Office européen des brevets

(11) **EP 4 378 742 A1**

(12) **EUROPEAN PATENT APPLICATION**
published in accordance with Art. 153(4) EPC

(43) Date of publication:
**05.06.2024  Bulletin 2024/23**

(21) Application number: **22848251.9**

(22) Date of filing: **08.07.2022**

(51) International Patent Classification (IPC):
*B60L 50/61* (2019.01)     *B60L 50/62* (2019.01)
*B60W 20/11* (2016.01)     *B60W 20/12* (2016.01)

(52) Cooperative Patent Classification (CPC):
**B60L 50/61; B60L 50/62; B60W 20/11;
B60W 20/12;** Y02T 10/62; Y02T 10/70

(86) International application number:
**PCT/CN2022/104764**

(87) International publication number:
**WO 2023/005646 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2021  CN 202110866880**

(71) Applicant: **Beijing CHJ Information Technology
Co., Ltd.
Beijing 101399 (CN)**

(72) Inventor: **GUO, Jian
Beijing 101399 (CN)**

(74) Representative: **Maiwald GmbH
Elisenhof
Elisenstraße 3
80335 München (DE)**

(54) **VEHICLE RANGE EXTENDER CONTROL METHOD AND APPARATUS, MEDIUM, AND EXTENDED-RANGE VEHICLE**

(57)     Provided are a vehicle range extender control method and apparatus, a medium, and an extended-range vehicle. The vehicle range extender control method comprises: determining multiple candidate power generation strategies of a range extender for a vehicle in a future trip (S11); determining energy efficiency contribution information of the candidate power generation strategies, the energy efficiency contribution information being used for representing the relationship between costs and generated energy (S12); and determining a target power generation strategy according to the energy efficiency contribution information of the candidate power generation strategies, and controlling, according to the target power generation strategy, the range extender to operate (S13). Therefore, the reasonability of the global optimal control strategy for power generation of the range extender is improved, and the use cost of the vehicle is reduced.

```
┌─────────────────────────────────────────────────────────┐
│ determining a plurality of candidate generation         │
│ strategies for a range extender of a vehicle during a    │──── S11
│ future route                                             │
└─────────────────────────────────────────────────────────┘
                          │
                          ▼
┌─────────────────────────────────────────────────────────┐
│ determining energy efficiency contribution information   │
│ of each candidate generation strategy, wherein the       │
│ energy efficiency contribution information is configured  │──── S12
│ for representing a relationship between a cost and        │
│ generated energy                                         │
└─────────────────────────────────────────────────────────┘
                          │
                          ▼
┌─────────────────────────────────────────────────────────┐
│ determining a target generation strategy according to    │
│ the energy efficiency contribution information of each    │
│ candidate generation strategy, and controlling operation │──── S13
│ of the range extender according to the target            │
│ generation strategy                                      │
└─────────────────────────────────────────────────────────┘
```

FIG. 1

**Description**

**CROSS-REFERENCE TO RELATED APPLICATIONS**

This application is based on and claims priority to Chinese Patent Application No. 202110866880.0, filed on July 29, 2021, the entire contents of which are incorporated herein by reference.

**TECHNICAL FIELD**

The present disclosure relates to a field of vehicle control technologies, in particularly, to a method and an apparatus for controlling a range extender of a vehicle, a storage medium and an extended-range vehicle.

**BACKGROUND**

An extended-range electric vehicle (or an extended-range vehicle for short) is a vehicle that generates electric energy from fuel by using a range extender and is driven by the electric energy. The range extender is generally composed of a combination of an engine and a generator, capable of providing electric energy except for a power battery, thereby increasing a driving mileage of the vehicle. In a relevant scenario, when calculating a generation power of the range extender, a minimum fuel consumption is taken as an objective, which is not suitable for an extended-range electric vehicle stored with sufficient electricity quantity. Moreover, when calculating the generation power of the range extender, there is a lack of consideration for an impact of energy efficiency contribution on global control, resulting in a low rationality of a global optimization control strategy for the generation power of the range extender.

**SUMMARY**

The purpose of the present disclosure is to provide a method and an apparatus for controlling a range extender of a vehicle, a storage medium and an extended-range vehicle, with determining an energy consumption cost and an energy efficiency power in a future route, and further determining energy efficiency contribution information, and determining generation control strategy of the range extender based on the energy efficiency contribution information, capable of improving rationality of a global optimization control strategy for generation of the range extender and reducing usage costs of the vehicle.

In order to achieve the above objectives, in a first aspect, the present disclosure provides a method for controlling a range extender of a vehicle. The method includes:

determining a plurality of candidate generation strategies for a range extender of a vehicle during a future route;
determining energy efficiency contribution information of each candidate generation strategy, in which, the energy efficiency contribution information is configured for representing a relationship between a cost and generated energy; and
determining a target generation strategy according to the energy efficiency contribution information of each candidate generation strategy, and controlling operation of the range extender according to the target generation strategy.

Alternatively, determining the energy efficiency contribution information of each candidate generation strategy includes:

determining an energy consumption cost and an energy efficiency power of each candidate generation strategy; and
determining the energy efficiency contribution information of each candidate generation strategy based on the energy consumption cost and the energy efficiency power corresponding to each candidate generation strategy.

Alternatively, determining the energy efficiency power of each candidate generation strategy includes:

determining a generation thermal energy power of the candidate generation strategy, in which, the generation thermal energy power is a power of thermal energy generated by an engine when the range extender operates according to the candidate generation strategy;
calculating a thermal energy power difference between the generation thermal energy power and an air conditioner heating thermal energy power during the future route;
determining the generation thermal energy power or the air conditioner heating thermal energy power as an effective thermal energy power based on the thermal energy power difference; and
determining the energy efficiency power at least based on a total generation power and the generation thermal energy power of the candidate generation strategy.

Alternatively, before determining the energy efficiency power at least based on the total generation power and the generation thermal energy power of the candidate generation strategy, the method includes:

estimating a load required power and a drive required power for the future route, and determining a sum of the load required power and the drive required power as a route consumption generation power;
in which, in response to determining that a difference between the total generation power of the candidate generation strategy and the route consumption generation power is less than or equal to 0, determining the energy efficiency power at least based on the total generation power and the generation thermal energy power of the candidate generation strategy includes:
determining the energy efficiency power based on the total generation power and the generation thermal energy power of the candidate generation strategy.

Alternatively, before determining the energy efficiency power at least based on the total generation power and the generation thermal energy power of the candidate generation strategy, the method includes:

estimating a load required power and a drive required power for the future route, and determining a sum of the load required power and the drive required power as a route consumption generation power;
in which, in response to determining that a difference between the total generation power of the candidate generation strategy and the route consumption generation power is greater than 0, determining the energy efficiency power at least based on the total generation power and the generation thermal energy power of the candidate generation strategy includes:

calculating a storage loss power based on a preset electrical energy storage conversion efficiency and the difference; and
calculating the energy efficiency power based on the total generation power of the candidate generation strategy, the storage loss power, and the effective thermal energy power.

Alternatively, determining the energy efficiency contribution information of each candidate generation strategy based on the energy consumption cost and the energy efficiency power corresponding to each candidate generation strategy includes:
for each candidate generation strategy, obtaining an energy efficiency contribution value of the candidate generation strategy by calculating a ratio of the energy consumption cost and the energy efficiency power of the candidate generation strategy, in which, the energy efficiency contribution information includes the energy efficiency contribution value.
Alternatively, the candidate generation strategy includes a number of generation times in the future route, a generation duration corresponding to each generation, and a generation power for each generation.
Alternatively, the number of generation times is determined based on a distance and/or a road condition of the future route.
Alternatively, the energy consumption cost includes a fuel cost, and determining the energy consumption cost of each candidate generation strategy includes:
determining the fuel cost corresponding to the candidate generation strategy based on a fuel consumption corresponding to the total generation power of the candidate generation strategy and a fuel unit price.
Alternatively, determining the fuel cost corresponding to the candidate generation strategy based on the fuel consumption corresponding to the total generation power of the candidate generation strategy and the fuel unit price includes:

determining an integral of a target calculation value of the range extender when operating based on the candidate generation strategy over time, and determining an integral calculation result as the fuel consumption corresponding to the total generation power of the candidate generation strategy, in which, the target calculation value is a quotient of a product of a generation power output by the range extender over time and a specific fuel consumption of fuel used by the vehicle and a fuel density of the fuel; and
determining a product of the fuel consumption and the fuel unit price as the fuel cost corresponding to the candidate generation power.

In a second aspect, the present disclosure provides an apparatus for controlling a range extender of a vehicle. The apparatus includes:

a first determination module, configured to determine a plurality of candidate generation strategies for a range extender of a vehicle during a future route;

a second determination module, configured to determine energy efficiency contribution information of each candidate generation strategy, in which, the energy efficiency contribution information is configured for representing a relationship between a cost and generated energy; and

a control module, configured to determine a target generation strategy according to the energy efficiency contribution information of each candidate generation strategy, and control operation of the range extender according to the target generation strategy.

Alternatively, the second determination module is configured to:

determine an energy consumption cost and an energy efficiency power of each candidate generation strategy; and
determine the energy efficiency contribution information of each candidate generation strategy based on the energy consumption cost and the energy efficiency power corresponding to each candidate generation strategy.

Alternatively, the second determination module is configured to:

determine a generation thermal energy power of the candidate generation strategy, in which, the generation thermal energy power is a power of thermal energy generated by an engine when the range extender operates according to the candidate generation strategy;
calculate a thermal energy power difference between the generation thermal energy power and an air conditioner heating thermal energy power during the future route;
determine the generation thermal energy power or the air conditioner heating thermal energy power as an effective thermal energy power based on the thermal energy power difference; and
determine the energy efficiency power at least based on a total generation power and the generation thermal energy power of the candidate generation strategy.

Alternatively, the second determination module is configured to, before determining the energy efficiency power at least based on the total generation power and the generation thermal energy power of the candidate generation strategy, estimate a load required power and a drive required power for the future route, and determine a sum of the load required power and the drive required power as a route consumption generation power; and

in response to determining that a difference between the total generation power of the candidate generation strategy and the route consumption generation power is less than or equal to 0, determine the energy efficiency power based on the total generation power and the generation thermal energy power of the candidate generation strategy.

Alternatively, the second determination module is configured to:

estimate a load required power and a drive required power for the future route, and determine a sum of the load required power and the drive required power as a route consumption generation power;
in response to determining that a difference between the total generation power of the candidate generation strategy and the route consumption generation power is greater than 0, calculate a storage loss power based on a preset electrical energy storage conversion efficiency and the difference; and
calculate the energy efficiency power based on the total generation power of the candidate generation strategy, the storage loss power, and the effective thermal energy power.

Alternatively, the second determination module is configured to, for each candidate generation strategy, obtain an energy efficiency contribution value of the candidate generation strategy by calculating a ratio of the energy consumption cost and the energy efficiency power of the candidate generation strategy, in which, the energy efficiency contribution information includes the energy efficiency contribution value.

Alternatively, the candidate generation strategy includes a number of generation times in the future route, a generation duration corresponding to each generation, and a generation power for each generation.

Alternatively, the number of generation times is determined based on a distance and/or a road condition of the future route.

Alternatively, the energy consumption cost includes a fuel cost, and the second determination module is configured to, determine the fuel cost corresponding to the candidate generation strategy based on a fuel consumption corresponding to the total generation power of the candidate generation strategy and a fuel unit price.

Alternatively, the second determination module is configured to, determine an integral of a target calculation value of the range extender when operating based on the candidate generation strategy over time, and determine an integral calculation result as the fuel consumption corresponding to the total generation power of the candidate generation strategy, in which, the target calculation value is a quotient of a product of a generation power output by the range extender over time and a specific fuel consumption of fuel used by the vehicle and a fuel density of the fuel; and determine a product of the fuel consumption and the fuel unit price as the fuel cost corresponding to the candidate generation power.

In a third aspect, the present disclosure provides a computer-readable storage medium, having a computer program stored thereon. When the computer program is executed by a processor, steps of the method according to any one of the first aspect are implemented.

In a fourth aspect, the present disclosure provides an extended-range vehicle. The extended-range vehicle includes a controller, the controller includes a memory and a processor, and the memory has a computer program stored thereon. When the processor executes the computer program, steps of the method according to any one of the first aspect are implemented.

According to the above technical solution, before departure of the future route, the energy efficiency contribution information of the plurality of candidate generation strategies for the range extender during the future route, the target generation strategy is determined, and the operation of the range extender is controlled according to the target generation strategy. Therefore, the rationality of the global optimization control strategy for the generation power of the range extender may be improved, and usage costs of the vehicle may be reduced.

Other features and advantages of the present disclosure will be explained in detail in the following detailed description.

## BRIEF DESCRIPTION OF THE DRAWINGS

The accompanying drawings are intended to provide a further understanding of the present disclosure and form a part of the description, which are used together with the detailed description below to explain the present disclosure, but do not constitute a limitation on the present disclosure, in which:

FIG. 1 is a flowchart illustrating a method for controlling a range extender of a vehicle according to some embodiments.
FIG. 2 is a flowchart illustrating an implementation of step S12 in FIG. 1 according to some embodiments.
FIG. 3 is a flowchart illustrating an implementation of step S121 in FIG. 2 according to some embodiments.
FIG. 4 is a block diagram illustrating an apparatus for controlling a range extender of a vehicle according to some embodiments.
FIG. 5 is a block diagram illustrating an electronic device according to some embodiments.

## DETAILED DESCRIPTION

Descriptions will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

It is worth noting that for the purpose of simple description, method embodiments provided in the present disclosure are all expressed as a series of action combinations. However, those skilled in the art should be known that the present disclosure is not limited by an order of the described actions. Secondly, those skilled in the art should also be known that embodiments described in the description all belongs to preferable embodiments, and related actions may not be necessary for the present disclosure.

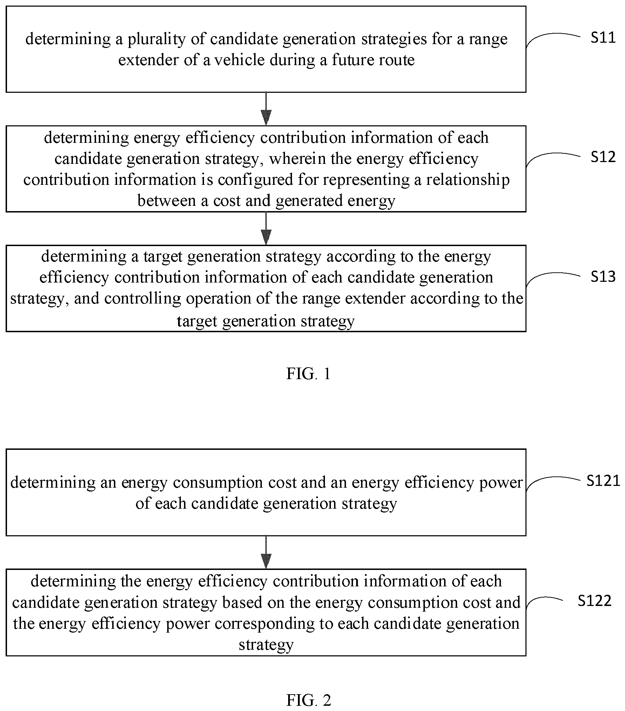

FIG. 1 is a flowchart illustrating a method for controlling a range extender of a vehicle according to some embodiments. The method may be performed by a range extender controller, or may be performed by a vehicle control unit (VCU). Referring to in FIG. 1, the method includes the following method blocks.

At block S 11, a plurality of candidate generation strategies for a range extender of a vehicle during a future route is determined.

In some embodiments, the future route may be obtained based on navigation information, and the plurality of candidate generation strategies for the range extender of the vehicle during the future route may be determined based on road condition information, such as, slope information, driving speed information, lighting usage information, etc.

For example, the plurality of candidate generation strategies for the range extender during the future route may be determined based on an optimizing algorithm. The plurality of candidate generation strategies corresponding to the future route may be determined from preset range extender generation strategies through the optimization algorithm, such as a hill climbing algorithm, a simulated annealing algorithm, and a genetic algorithm. As such, the plurality of candidate generation strategies may be preferably selected from a large number of range extender generation strategies to reduce computation amount, improve a computation efficiency.

At block S 12, energy efficiency contribution information of each candidate generation strategy is determined. The energy efficiency contribution information is configured for representing a relationship between a cost and generated energy.

On the basis of the above embodiment, FIG. 2 is a flowchart illustrating an implementation of the block S12 in FIG. 1 according to some embodiments. The block S12 includes the following blocks.

At block S121, an energy consumption cost and an energy efficiency power generated by each candidate generation strategy are determined.

The energy consumption cost is configured to represent a cost corresponding to energy consumed by the candidate generation strategy, while the energy efficiency power is configured to represent an actual power that can be provided to the vehicle while consuming the corresponding energy.

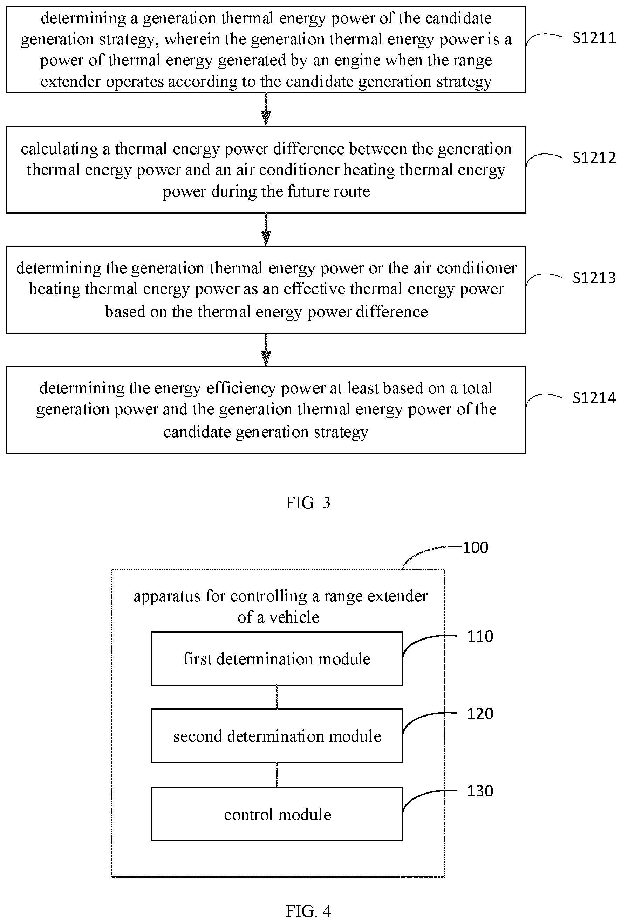

In an implementation, as illustrated in FIG. 3, in the block S121, determining the energy efficiency power generated by each candidate generation strategy includes the following blocks.

At block S1211, a generation thermal energy power of the candidate generation strategy is determined. The generation thermal energy power is a power of thermal energy generated by an engine when the range extender operates according to the candidate generation strategy.

The generation thermal energy power refers to a thermal energy power that the range extender can provide to a heating air pipeline. The generation thermal energy power is required to subtract a thermal energy power lost by engine own heat dissipation and pipeline heat dissipation on the basic of a thermal energy power originally generated by generation of the engine.

At block S1212, a thermal energy power difference between the generation thermal energy power and an air conditioner heating thermal energy power during the future route is calculated.

The air conditioner heating thermal energy power refers to a thermal energy power required by the heating air pipeline of the air conditioner when the air conditioner is in a heating mode. The air conditioner heating thermal energy power may be determined based on environmental temperature information and seasonal information during the future route.

At block S1213, the generation thermal energy power or the air conditioner heating thermal energy power is determined as an effective thermal energy power based on the thermal energy power difference.

In response to the thermal energy power difference being less than or equal to 0, it indicates that a power of the thermal energy generated by the engine cannot meet an air conditioner heating demand when the range extender operates according to the candidate generation strategy. It is required a compressor of the air conditioner to heat based on an electric energy provided by the generator and/or an electric energy provided by a battery pack, to provide the thermal energy power corresponding to the thermal energy power difference, and to determine the generation thermal energy power as the effective thermal energy power.

In response to the thermal energy power difference being greater than 0, it indicates that the power of the thermal energy generated by the engine is greater than the air conditioner heating demand when the range extender operates according to the candidate generation strategy. The air conditioner heating thermal energy power is determined as the effective thermal energy power, and the thermal energy power corresponding to the thermal energy power difference may be dissipated into air through a cooling manner such as cooling liquid.

At block S1214, the energy efficiency power is determined at least based on a total generation power and the generation thermal energy power of the candidate generation strategy.

The total generation power is obtained by performing an integral calculation based on a number of generation times in the future route, a generation duration corresponding to each generation, and a generation power for each generation.

In a specific implementation, a sum of the total generation power and the generation thermal energy power is determined as the energy efficiency power.

With adopting the above technical solution, it is not only fully considered the energy efficiency power caused by the generation power, but also considered the power actually utilized by the power of the thermal energy generated by the engine, which may improve rationality of calculating the energy efficiency power, and further improve rationality of a global optimization control strategy for determining the generation power of the range extender, and reduce usage costs of the vehicle.

On the basic of the above embodiment, before the block S1214, a load required power and a drive required power for the future route are estimated, and a sum of the load required power and the drive required power is determined as a route consumption generation power.

The load required power refers to a generation power which is required to supply to a load, such as, a lighting fixture, or a compressor of the air conditioner, etc., for normal operation of the load during a generation process of the range extender. The drive required power refers to a generation power which is required to supply to a drive motor to drive the vehicle for moving during the generation process. The route consumption generation power represents an entire vehicle power which is required to consume by both the generator and the battery pack for providing to the load and the drive motor during the generation process of the range extender.

In response to determining that an electrical power difference between the total generation power of the candidate generation strategy and the route consumption generation power is less than or equal to 0, determining the energy efficiency power at least based on the total generation power and the generation thermal energy power of the candidate generation strategy includes:

determining the energy efficiency power based on the total generation power and the generation thermal energy power of the candidate generation strategy.

In response to the electrical power difference being less than or equal to 0, it indicates that the generation power of the range extender cannot meet the entire vehicle power. It is required to provide electricity to the load and/or the drive motor by the battery pack while the range extender is in operation. That is, in this case, all the generation power of the range extender is used to provide the electricity to the load and/or the drive motor, and no generation power is stored in the battery pack.

On the basic of the above embodiment, before the block S1214, a load required power and a drive required power for the future route are estimated, and a sum of the load required power and the drive required power is determined as a route consumption generation power.

In response to determining that an electrical power difference between the total generation power of the candidate generation strategy and the route consumption generation power is greater than 0, determining the energy efficiency power at least based on the total generation power and the generation thermal energy power of the candidate generation strategy includes:

calculating a storage loss power based on a preset electrical energy storage conversion efficiency and the difference; and

calculating the energy efficiency power based on the total generation power of the candidate generation strategy, the storage loss power, and the effective thermal energy power.

In response to the electrical power difference being greater than 0, it indicates that the generation power of the range extender may not only meet the entire vehicle power, but also provide charging electricity to the battery pack while the range extender is in operation. The electrical power difference is a generation power of the charging electricity provided to the battery pack.

The storage loss power refers to a power consumed during a process of converting electrical energy into chemical energy for storage, and then converting the chemical energy into the electrical energy. The storage loss power may be calculated by multiplying a difference between the preset electrical energy storage conversion efficiency and 1 with a storage generation power. The preset electrical energy storage conversion efficiency may be 0.95. For example, storage loss power = (electrical energy storage conversion efficiency -1) $\times$ (total generation power- route consumption generation power).

An integral calculation is performed on a sum of the generation power for each generation and the corresponding effective thermal energy power to obtain a first integral sum of the total generation power and the effective thermal energy power. A second integral sum of the generation power for each generation and the route consumption generation power. An integral sum difference between the first integral sum and the second integral sum is determined as the energy efficiency power. For example:

$$
\begin{aligned}
\text{energy efficiency power} \\
= \int ( \text{generation power of range extender} \\
+ \min(\text{air conditioner heating thermal energy power, generation thermal energy power}))dt \\
+ (\text{electrical energy storage conversion efficiency} - 1) \\
\times \max\left(0, \int ( \text{generation power of range extender} - \text{route consumption generation power})dt\right)
\end{aligned}
$$

where a unit of the generation power of the range extender, the air conditioner heating thermal energy power, and the route consumption generation power is kilowatt.

With adopting the above technical solution, it is considered an impact of an energy conversion loss on calculating the energy efficiency power since there may be the energy conversion loss due to electrical energy storage and consumption if there is the storage generation power, during the generation process, which may further improve the rationality of calculating the energy efficiency power, and improve the rationality of the global optimization control strategy for determining the generation power of the range extender, and reduce the usage costs of the vehicle.

At block S122, the energy efficiency contribution information of each candidate generation strategy is determined based on the energy consumption cost and the energy efficiency power corresponding to each candidate generation strategy.

Specifically, a quotient of the energy efficiency power and the energy consumption cost is determined as an energy efficiency contribution value of the candidate generation strategy. The energy efficiency contribution information includes the energy efficiency contribution value.

On the basis of the above embodiment, the energy consumption cost includes a fuel cost. In the block S121, determining the energy consumption cost of each candidate generation strategy includes:

determining the fuel cost corresponding to the candidate generation strategy based on a fuel consumption corresponding to the total generation power of the candidate generation strategy and a fuel unit price.

An integral of a target calculation value of the range extender when operating based on the candidate generation strategy over time is determined, and an integral calculation result is determined as the fuel consumption corresponding to the total generation power of the candidate generation strategy. The target calculation value is a quotient of a product of a generation power output by the range extender over time and a specific fuel consumption of fuel used by the vehicle and a fuel density of the fuel.

A product of the fuel consumption and the fuel unit price is determined as the fuel cost corresponding to the candidate generation power, namely:

$$\text{fuel cost} = \int \left( \frac{\text{generation power of range extender} \times \text{specific fuel consumption}}{\text{fuel density}} \right) dt$$
$$\times \text{fuel unit price}$$

The specific fuel consumption, also known as a fuel consumption rate, refers to a mass of fuel consumed by an engine within 1 hour for every 1 kW of effective power output (in a unit of gram). Different fuels have different fuel densities, and there may be slight changes in fuel density due to different seasons, climates. The smaller a fuel specific gravity, the lower the fuel density.

In the block S 122, determining the energy efficiency contribution information of each candidate generation strategy based on the energy consumption cost and the energy efficiency power corresponding to each candidate generation strategy includes: determining an energy efficiency contribution value based on a quotient of the energy efficiency power and the fuel cost corresponding to each candidate generation strategy, namely: energy efficiency contribution value=energy efficiency power/fuel cost.

In an implementation, the energy consumption cost also includes a charging cost, and determining the energy consumption cost generated by each candidate generation strategy further includes:

determining a required charging amount corresponding to each candidate power generation strategy based on a maximum additional generation amount that the range extender can provide for the vehicle when operating at maximum power generation power, and an additional total generation amount that the range extender can provide for the vehicle when operating at each candidate power generation strategy; and

determining the charging cost based on the required charging amount and an electricity unit price.

In the block S 122, determining the energy efficiency contribution information of each candidate generation strategy based on the energy consumption cost and the energy efficiency power corresponding to each candidate generation strategy includes: determining a cost sum of the charging cost and the fuel cost corresponding to each candidate power generation strategy, and determining the energy efficiency contribution value of each candidate generation strategy based on a quotient of the energy efficiency power and the cost sum.

In a case where there is no storage generation power when the range extender operates with the candidate power generation strategy, a generation amount obtained by integrating the power generation of the range extender when operating with the candidate power generation strategy over time is determined as the additional total generation amount.

Alternatively, in a case where there is the storage generation power when the range extender operates with the candidate power generation strategy, a difference between the generation amount obtained by integrating the power generation of the range extender when operating with the candidate power generation strategy over time and the generation amount that can be provided by the storage generation power is determined as the additional generation amount. in which,

additional generation amount

$$= \int (\text{power generation of range extender})dt$$

$$- \text{generation amount provided by storage generation power}$$

, and the energy efficiency contribution value is calculated by using the following formula:

energy efficiency contribution value

$$= \frac{+(\text{total charging amount for charging station}) \times \dfrac{\text{energy efficiency power}}{\text{electrical energy storage conversion efficiency}}}{\text{fuel cost} + \dfrac{(\text{required charging amount})}{\text{charging efficiency}} \times \text{electricity unit price}}$$

The charging efficiency is related to a charging interface and a charging current, for example, influenced by fast and slow charging interfaces. In an example, charging efficiency=0.95.

It can be understood that a difference between the maximum additional generation amount and a storage generation amount corresponding to each generation power of the range extender is the required charging amount. The maximum additional generation amount may be 5 kilowatts.

At block S13, a target generation strategy is determined according to the energy efficiency contribution information of each candidate generation strategy, and operation of the range extender is controlled according to the target generation strategy.

Specifically, a candidate power generation strategy with a highest energy efficiency contribution value is determined as the target generation strategy.

According to the above technical solution, before departure of the future route, the energy efficiency contribution information of the plurality of candidate generation strategies for the range extender during the future route, the target generation strategy is determined, and the operation of the range extender is controlled according to the target generation strategy. Therefore, the rationality of the global optimization control strategy for the generation power of the range extender may be improved, and usage costs of the vehicle may be reduced.

On the basis of the above embodiments, the candidate generation strategy includes a number of generation times in the future route, a generation duration corresponding to each generation, and a generation power for each generation.

On the basis of the above embodiments, the number of generation times is determined based on a distance and/or a road condition of the future route. The road condition may include a slope and an energy recovery condition of the corresponding slope.

Based on the same invention concept, the present disclosure also provides an apparatus for controlling a range extender of a vehicle. The apparatus may implement all or part of the steps of the method for controlling the range extender of the vehicle in software, hardware, or a combination of both. FIG. 4 is a block diagram illustrating an apparatus 100 for controlling a range extender of a vehicle according to some embodiments. As illustrated in FIG. 4, the apparatus 100 includes a first determination module 110, a second determination module 120 and a control module 130.

The first determination module 110 is configured to determine a plurality of candidate generation strategies for a range extender of a vehicle during a future route.

The second determination module 120 is configured to determine energy efficiency contribution information of each candidate generation strategy, in which, the energy efficiency contribution information is configured for representing a relationship between a cost and generated energy.

The control module 130 is configured to determine a target generation strategy according to the energy efficiency contribution information of each candidate generation strategy, and control operation of the range extender according to the target generation strategy.

According to the above apparatus, before departure of the future route, the energy efficiency contribution information of the plurality of candidate generation strategies for the range extender during the future route, the target generation strategy is determined, and the operation of the range extender is controlled according to the target generation strategy. Therefore, the rationality of the global optimization control strategy for the generation power of the range extender may be improved, and usage costs of the vehicle may be reduced.

Alternatively, the second determination module 120 is configured to:

determine an energy consumption cost and an energy efficiency power of each candidate generation strategy; and

determine the energy efficiency contribution information of each candidate generation strategy based on the energy consumption cost and the energy efficiency power corresponding to each candidate generation strategy.

Alternatively, the second determination module 120 is configured to:

determine a generation thermal energy power of the candidate generation strategy, in which, the generation thermal energy power is a power of thermal energy generated by an engine when the range extender operates according to the candidate generation strategy;

calculate a thermal energy power difference between the generation thermal energy power and an air conditioner heating thermal energy power during the future route;

determine the generation thermal energy power or the air conditioner heating thermal energy power as an effective thermal energy power based on the thermal energy power difference; and

determine the energy efficiency power at least based on a total generation power and the generation thermal energy power of the candidate generation strategy.

Alternatively, the second determination module 120 is configured to, before determining the energy efficiency power at least based on the total generation power and the generation thermal energy power of the candidate generation strategy, estimate a load required power and a drive required power for the future route, and determine a sum of the load required power and the drive required power as a route consumption generation power; and

in response to determining that a difference between the total generation power of the candidate generation strategy and the route consumption generation power is less than or equal to 0, determine the energy efficiency power based on the total generation power and the generation thermal energy power of the candidate generation strategy.

Alternatively, the second determination module 120 is configured to:

estimate a load required power and a drive required power for the future route, and determine a sum of the load required power and the drive required power as a route consumption generation power;

in response to determining that a difference between the total generation power of the candidate generation strategy and the route consumption generation power is greater than 0, calculate a storage loss power based on a preset electrical energy storage conversion efficiency and the difference; and

calculate the energy efficiency power based on the total generation power of the candidate generation strategy, the storage loss power, and the effective thermal energy power.

Alternatively, the second determination module 120 is configured to, for each candidate generation strategy, obtain an energy efficiency contribution value of the candidate generation strategy by calculating a ratio of the energy consumption cost and the energy efficiency power of the candidate generation strategy, in which, the energy efficiency contribution information includes the energy efficiency contribution value.

Alternatively, the candidate generation strategy includes a number of generation times in the future route, a generation duration corresponding to each generation, and a generation power for each generation.

Alternatively, the number of generation times is determined based on a distance and/or a road condition of the future route.

Alternatively, the energy consumption cost includes a fuel cost, and the second determination module is configured to, determine the fuel cost corresponding to the candidate generation strategy based on a fuel consumption corresponding to the total generation power of the candidate generation strategy and a fuel unit price.

Alternatively, the second determination module 120 is configured to, determine an integral of a target calculation value of the range extender when operating based on the candidate generation strategy over time, and determine an integral calculation result as the fuel consumption corresponding to the total generation power of the candidate generation strategy, in which, the target calculation value is a quotient of a product of a generation power output by the range extender over time and a specific fuel consumption of fuel used by the vehicle and a fuel density of the fuel; and

determine a product of the fuel consumption and the fuel unit price as the fuel cost corresponding to the candidate generation power.

Regarding the apparatus in the above embodiments, the specific ways in which respective modules perform operations have been described in detail in the relevant method embodiments, which will not be repeated herein.

In addition, it is worth noting that the modules in the above embodiment may be devices independent of each other or the same device in the specific implementation. For example, the second determination module 120 and the control module 130 may be the same module or two modules, which will not be limited by the present disclosure.

The present disclosure also provides a computer-readable storage medium, having a computer program stored thereon. When the computer program is executed by a processor, steps of any one of the aforementioned methods are implemented.

The present disclosure also provides a controller. The controller includes a memory and a processor, and the memory has a computer program stored thereon. When the processor executes the computer program, steps of any one of the aforementioned methods are implemented.

The present disclosure also provides an extended-range vehicle. The extended-range vehicle includes the controller.

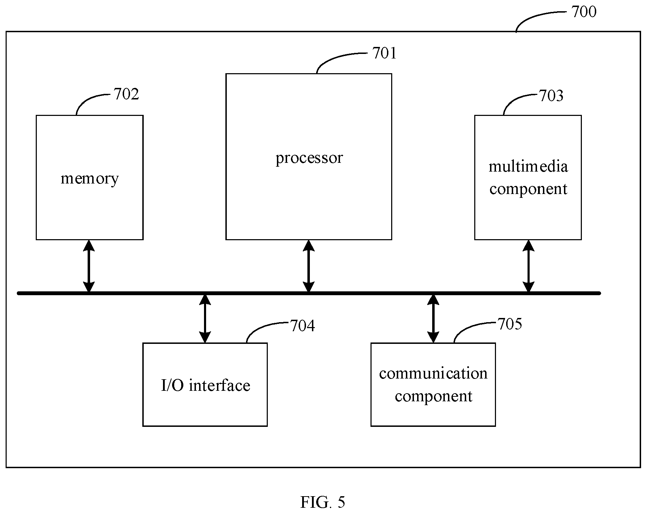

FIG. 5 is a block diagram illustrating an electronic device 700 according to some embodiments. The electronic device 700 may be configured as a controller. As illustrated in FIG. 5, the electronic device 700 may include a processor 701 and a memory 702. The electronic device 700 may also include one or more of a multimedia component 703, an input/output (I/O) interface 704, and a communication component 705.

The processor 701 is configured to control overall operations of the electronic device 700 to complete all or part of the steps in the method for controlling the range extender of the vehicle as described above.

The memory 702 is configured to store various types of data to support operations on the electronic device 700. The data may include, for example, instructions for any application program or method used to operate on the electronic device 700, as well a data related to the application program such as future route information, navigation information, and the like. The memory 702 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or an optical disc.

The multimedia component 703 may include a screen and an audio component. The screen, for example, may be a touch screen, and the audio component is configured to output and/or input an audio signal. For example, the audio component may include a microphone, configured to receive an external audio signal. The received audio signal may be further stored in the memory 702 or sent through the communication component 705. The audio component also includes at least one speaker configured to output the audio signal.

The I/O interface 704 provides an interface between the processor 701 and other interface modules. The aforementioned other interface modules may be a keyboard, a mouse, buttons, etc. These buttons may be virtual or physical.

The communication component 705 is configured to perform wired or wireless communication between the electronic device 700 and other devices. The wireless communication may be, such as, Wi-Fi, Bluetooth, near field communication (NFC), 2G, 3G, 4G, NB-IOT, eMTC, or other 5G, etc., or any combination of one or more of them, which will not be limited herein. Therefore, the corresponding communication component 705 may include a Wi-Fi module, a Bluetooth module, an NFC module, etc.

In some embodiments, the electronic device 700 may be implemented by one or more application specific integrated circuits (ASICs), digital signal processors (DSPs), digital signal processing devices (DSPDs), programmable logic devices (PLDs), field programmable gate array (FPGAs), controllers, microcontrollers, microprocessors, or other electronic elements, and configured to perform the aforementioned method for controlling the range extender of the vehicle.

In other embodiments, there is also provided a computer-readable storage medium including program instructions. The program instructions are caused to implement the steps of the method for controlling the range extender of the vehicle when executed by the processor. For example, the computer-readable storage medium may be the memory 702 including the program instructions. The program instructions may be executed by the processor 701 of the electronic device 700 to complete the method for controlling the range extender of the vehicle as described above.

The above describes preferable embodiments of the present disclosure in detail in combination with the accompanying drawings. However, the present disclosure is not limited to the specific details of the aforementioned implementations. Within the scope of the technical concept of the present disclosure, a plurality of simple variations may be made on the technical solution of the present disclosure, all of which fall within the scope of protection of the present disclosure.

Furthermore, it should be noted that respective specific technical features described in the above specific implementations can be combined in any suitable way without contradiction. In order to avoid unnecessary repetition, the present disclosure will not provide separate explanations for various possible combinations.

In addition, various different implementations in the present disclosure can also be combined in any way, as long as not contrary to the principles of the present disclosure, these should also be considered as the content disclosed by the present disclosure.

## Claims

1.    A method for controlling a range extender of a vehicle, comprising:

determining a plurality of candidate generation strategies for a range extender of a vehicle during a future route;
determining energy efficiency contribution information of each candidate generation strategy, wherein the energy efficiency contribution information is configured for representing a relationship between a cost and generated energy; and
determining a target generation strategy according to the energy efficiency contribution information of each candidate generation strategy, and controlling operation of the range extender according to the target generation strategy.

2. The method according to claim 1, wherein determining the energy efficiency contribution information of each candidate generation strategy comprises:

determining an energy consumption cost and an energy efficiency power of each candidate generation strategy; and
determining the energy efficiency contribution information of each candidate generation strategy based on the energy consumption cost and the energy efficiency power corresponding to each candidate generation strategy.

3. The method according to claim 2, wherein determining the energy efficiency power of each candidate generation strategy comprises:

determining a generation thermal energy power of the candidate generation strategy, wherein the generation thermal energy power is a power of thermal energy generated by an engine when the range extender operates according to the candidate generation strategy;
calculating a thermal energy power difference between the generation thermal energy power and an air conditioner heating thermal energy power during the future route;
determining the generation thermal energy power or the air conditioner heating thermal energy power as an effective thermal energy power based on the thermal energy power difference; and
determining the energy efficiency power at least based on a total generation power and the generation thermal energy power of the candidate generation strategy.

4. The method according to claim 3, before determining the energy efficiency power at least based on the total generation power and the generation thermal energy power of the candidate generation strategy, the method comprising:

estimating a load required power and a drive required power for the future route, and determining a sum of the load required power and the drive required power as a route consumption generation power;
wherein, in response to determining that a difference between the total generation power of the candidate generation strategy and the route consumption generation power is less than or equal to 0, determining the energy efficiency power at least based on the total generation power and the generation thermal energy power of the candidate generation strategy comprises:
determining the energy efficiency power based on the total generation power and the generation thermal energy power of the candidate generation strategy.

5. The method according to claim 3, before determining the energy efficiency power at least based on the total generation power and the generation thermal energy power of the candidate generation strategy, the method comprising:

estimating a load required power and a drive required power for the future route, and determining a sum of the load required power and the drive required power as a route consumption generation power;
wherein, in response to determining that a difference between the total generation power of the candidate generation strategy and the route consumption generation power is greater than 0, determining the energy efficiency power at least based on the total generation power and the generation thermal energy power of the candidate generation strategy comprises:

calculating a storage loss power based on a preset electrical energy storage conversion efficiency and the difference; and
calculating the energy efficiency power based on the total generation power of the candidate generation strategy, the storage loss power, and the effective thermal energy power.

6. The method according to any one of claims 2 to 5, wherein determining the energy efficiency contribution information of each candidate generation strategy based on the energy consumption cost and the energy efficiency power corresponding to each candidate generation strategy comprises:
for each candidate generation strategy, obtaining an energy efficiency contribution value of the candidate generation strategy by calculating a ratio of the energy consumption cost and the energy efficiency power of the candidate generation strategy, wherein the energy efficiency contribution information comprises the energy efficiency contribution value.

7. The method according to any one of claims 1 to 6, wherein the candidate generation strategy comprises a number of generation times in the future route, a generation duration corresponding to each generation, and a generation power for each generation.

8. The method according to claim 7, wherein the number of generation times is determined based on a distance and/or a road condition of the future route.

9. The method according to any one of claims 2 to 8, wherein the energy consumption cost comprises a fuel cost, and determining the energy consumption cost of each candidate generation strategy comprises:
determining the fuel cost corresponding to the candidate generation strategy based on a fuel consumption corresponding to the total generation power of the candidate generation strategy and a fuel unit price.

10. The method according to claim 9, wherein determining the fuel cost corresponding to the candidate generation strategy based on the fuel consumption corresponding to the total generation power of the candidate generation strategy and the fuel unit price comprises:

determining an integral of a target calculation value of the range extender when operating based on the candidate generation strategy over time, and determining an integral calculation result as the fuel consumption corresponding to the total generation power of the candidate generation strategy, wherein the target calculation value is a quotient of a product of a generation power output by the range extender over time and a specific fuel consumption of fuel used by the vehicle and a fuel density of the fuel; and
determining a product of the fuel consumption and the fuel unit price as the fuel cost corresponding to the candidate generation power.

11. An apparatus for controlling a range extender of a vehicle, comprising:

a first determination module, configured to determine a plurality of candidate generation strategies for a range extender of a vehicle during a future route;
a second determination module, configured to determine energy efficiency contribution information of each candidate generation strategy, wherein the energy efficiency contribution information is configured for representing a relationship between a cost and generated energy; and
a control module, configured to determine a target generation strategy according to the energy efficiency contribution information of each candidate generation strategy, and control operation of the range extender according to the target generation strategy.

12. The apparatus according to claim 11, wherein the second determination module is configured to:

determine an energy consumption cost and an energy efficiency power of each candidate generation strategy; and
determine the energy efficiency contribution information of each candidate generation strategy based on the energy consumption cost and the energy efficiency power corresponding to each candidate generation strategy.

13. The apparatus according to claim 12, wherein the second determination module is configured to:

determine a generation thermal energy power of the candidate generation strategy, wherein the generation thermal energy power is a power of thermal energy generated by an engine when the range extender operates according to the candidate generation strategy;
calculate a thermal energy power difference between the generation thermal energy power and an air conditioner heating thermal energy power during the future route;
determine the generation thermal energy power or the air conditioner heating thermal energy power as an effective thermal energy power based on the thermal energy power difference; and
determine the energy efficiency power at least based on a total generation power and the generation thermal energy power of the candidate generation strategy.

14. A computer-readable storage medium, having a computer program stored thereon, wherein, when the computer program is executed by a processor, steps of the method according to any one of claims 1 to 10 are implemented.

15. An extended-range vehicle comprising a controller, wherein the controller comprises a memory and a processor, the memory has a computer program stored thereon, and when the processor executes the computer program, steps of the method according to any one of claims 1 to 10 are implemented.

determining a plurality of candidate generation strategies for a range extender of a vehicle during a future route — S11

determining energy efficiency contribution information of each candidate generation strategy, wherein the energy efficiency contribution information is configured for representing a relationship between a cost and generated energy — S12

determining a target generation strategy according to the energy efficiency contribution information of each candidate generation strategy, and controlling operation of the range extender according to the target generation strategy — S13

FIG. 1

determining an energy consumption cost and an energy efficiency power of each candidate generation strategy — S121

determining the energy efficiency contribution information of each candidate generation strategy based on the energy consumption cost and the energy efficiency power corresponding to each candidate generation strategy — S122

FIG. 2

determining a generation thermal energy power of the candidate generation strategy, wherein the generation thermal energy power is a power of thermal energy generated by an engine when the range extender operates according to the candidate generation strategy ⌐ S1211

calculating a thermal energy power difference between the generation thermal energy power and an air conditioner heating thermal energy power during the future route ⌐ S1212

determining the generation thermal energy power or the air conditioner heating thermal energy power as an effective thermal energy power based on the thermal energy power difference ⌐ S1213

determining the energy efficiency power at least based on a total generation power and the generation thermal energy power of the candidate generation strategy ⌐ S1214

FIG. 3

100

apparatus for controlling a range extender of a vehicle

first determination module — 110

second determination module — 120

control module — 130

FIG. 4

FIG. 5

## INTERNATIONAL SEARCH REPORT

| International application No. |
| --- |
| **PCT/CN2022/104764** |

**A. CLASSIFICATION OF SUBJECT MATTER**

B60L 50/61(2019.01)i; B60L 50/62(2019.01)i; B60W 20/11(2016.01)i; B60W 20/12(2016.01)i

According to International Patent Classification (IPC) or to both national classification and IPC

**B. FIELDS SEARCHED**

Minimum documentation searched (classification system followed by classification symbols)

B60L; B60W

Documentation searched other than minimum documentation to the extent that such documents are included in the fields searched

Electronic data base consulted during the international search (name of data base and, where practicable, search terms used)

CNTXT, ENTXTC, VEN, ENTXT: 增程, 成本, 功率, 发电, 能耗, 耗能, 能量, 未来, 将来, 预测, 预估, 预计, 策略, 控制, 路况, 路线, 路径, range+, extend+, REEV, cost+, consumption+, power+, energy+, generat+, future+, forecast+, estimat+, strategy +, control+, road+, condition+, trip+, route.

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110155023 A (FORD GLOBAL TECHNOLOGIES, L.L.C.) 23 August 2019 (2019-08-23) description, paragraphs [0020]-[0136], and figures 1-7 | 1-2, 7-12, 14-15 |
| Y | CN 106427990 A (SAIC VOLKSWAGEN AUTOMOTIVE CO., LTD.) 22 February 2017 (2017-02-22) description, paragraphs [0058]-[0096], and figures 1-2 | 1-2, 7-12, 14-15 |
| A | CN 102951037 A (TONGJI UNIVERSITY) 06 March 2013 (2013-03-06) entire document | 1-15 |
| A | WO 2011134992 A1 (AVL LIST GMBH. et al.) 03 November 2011 (2011-11-03) entire document | 1-15 |
| A | US 2019248359 A1 (FORD GLOBAL TECHNOLOGIES, LLC.) 15 August 2019 (2019-08-15) entire document | 1-15 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **06 September 2022** | **21 September 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104764**

| Patent document cited in search report | | | Publication date (day/month/year) | Patent family member(s) | | | Publication date (day/month/year) |
|---|---|---|---|---|---|---|---|
| CN | 110155023 | A | 23 August 2019 | US | 2019248359 | A1 | 15 August 2019 |
|  |  |  |  | DE | 102019103226 | A1 | 14 August 2019 |
|  |  |  |  | US | 10960873 | B2 | 30 March 2021 |
| CN | 106427990 | A | 22 February 2017 | CN | 106427990 | B | 28 September 2018 |
| CN | 102951037 | A | 06 March 2013 | CN | 102951037 | B | 24 June 2015 |
| WO | 2011134992 | A1 | 03 November 2011 | EP | 2563634 | A1 | 06 March 2013 |
|  |  |  |  | AT | 507916 | A2 | 15 September 2010 |
|  |  |  |  | AT | 507916 | B1 | 15 January 2012 |
|  |  |  |  | EP | 2563634 | B1 | 26 March 2014 |
| US | 2019248359 | A1 | 15 August 2019 | CN | 110155023 | A | 23 August 2019 |
|  |  |  |  | DE | 102019103226 | A1 | 14 August 2019 |
|  |  |  |  | US | 10960873 | B2 | 30 March 2021 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110866880